# EUROPEAN PATENT SPECIFICATION

(11) **EP 4 065 681 B1**
(45) Date of publication and mention of the grant of the patent: **10.01.2024**
(21) Application number: 20816225.5
(22) Date of filing: 26.11.2020
(51) Int. Cl.: C12C 12/04, C12G 3/025, C12G 3/08, C12H 3/02, C12H 3/04

(54) **METHOD FOR THE REDUCTION OF AROMA LOSS DURING THE PRODUCTION OF ETHANOL-REDUCED AND ETHANOL-FREE BEVERAGES**
VERFAHREN ZUR VERRINGERUNG DES AROMAVERLUSTES BEI DER HERSTELLUNG VON ETHANOLREDUZIERTEN UND ETHANOLFREIEN GETRÄNKEN
PROCÉDÉ PERMETTANT DE RÉDUIRE LA PERTE D'ARÔME LORS DE LA PRODUCTION DE BOISSONS À TENEUR RÉDUITE EN ÉTHANOL ET SANS ÉTHANOL

(30) Priority: 26.11.2019 EP 19211654
(43) Date of publication of application: 05.10.2022
(73) Proprietor: Clariant Produkte (Deutschland) GmbH, 65929 Frankfurt am Main (DE)
(72) Inventor: BANNERT, Sebastian, 82380 Peißenberg (DE); VERHUELSDONK, Marcus, 82110 Germering (DE); ZAVREL, Michael, 82140 Olching (DE); GENSLER, Sven, 81379 München (DE); BITTERWOLF, Carina, 81543 München (DE)
(86) International application number: PCT/EP2020/084533
(87) International publication number: WO 2021/105521

(56) References cited:
- EP-A1- 3 351 613
- WO-A1-2014/161998
- US-A- 5 308 631
- US-A1- 2016 326 473

## Description

The present invention relates to a method for the reduction of aroma loss during the production of ethanol-reduced and ethanol-free beverages.

In contrast to a general reduction of beer and wine consumption, the demand of fermented and/or distilled beverages of reduced ethanol content was constantly increasing during the last decade. Muller et al. (Physikalische Verfahren zur Entalkoholisierung verschiedener Getränkematrizes und deren EinfluR auf qualitätsrelevante Merkmale; Chem. Ing. Tech. 2016, 88, No.12, 1911-1928) refer to an increase of more than 50% between 2010 and 2016. Even though several processes have been developed, aroma-loss is still a major challenge. Muller *et al.* refer to a loss of 94% of higher aliphatic alcohols and a loss of 100% of esters during the reduction of an initial ethanol content of 5 vol.-% to 0.51 vol.-% of beer by thermal de-alcoholization, which represents a major part of the aromatic profile of beer but also wine. So far, the aroma-loss is compensated by recycling part of the separated alcoholic fraction to the de-alcoholized beer or wine product, however, this measure is very limited as the aroma containing alcoholic fraction has an ethanol content of about 96 vol-%.

These findings of Muller *et al.* have been confirmed by Mangindaan et al. (Beverage dealcoholization processes: Past, present, and future; Trends in Food Science & Technology, 71 (2018) 36-45).

The inventors of the present invention have therefore set themselves the task to develop a method to improve the currently established processes for thermal dealcoholization of ethanol-containing beverages and to achieve a significantly increased final content of aromatic compounds in the de-alcoholized beverage product.

This task was solved by a method for the reduction of aroma loss during the production of ethanol-reduced and ethanol-free beverages comprising the steps:
(a) De-alcoholization of a beverage containing from 1 to 60 vol.-% ethanol by a thermal or membrane-based dealcoholization process;
(b) Separating the ethanol containing process stream from the de-alcoholized beverage;
(c)
   (i) Conveying the separated ethanol containing process stream to a condenser, at least one stripping column and subsequently to at least one adsorber column, or
   (ii) Conveying the separated ethanol containing process stream directly to at least one adsorber column;
   wherein the ethanol containing fraction of the ethanol containing process stream is adsorbed on the at least one adsorber column;
(d) Recycling of the remaining process stream to the de-alcoholized beverage.

The method of the present invention does not only produce de-alcoholized beverages with an excellent aromatic flavor profile and thereby overcoming the for decades existing problems of the already existing thermal or membrane de-alcoholization processes but is also cost efficient and suitable for industrial scale production as energy consumption is low and the method can be carried out in a continuous fashion. In addition, the method according to the present inventive can be integrated in any existing thermal or membrane dealcoholization process and plant without the need to alter the already existing technology. Further, no significant volume loss is occurring as separated ethanol can be desorbed and used/sold separately. No additional water has to be added to the dealcoholized beverage and gas streams are continuously recycled and reused.

Within the present application, the terms "method" and "process" are used synonymously and both refer to the inventive method as claimed within the claims.

Within the scope of the present invention, the term "beverage" according to step (a) (i.e. beverage undergoing the de-alcoholization process) is to be understood as comprising beer, wine and mash. The inventive method is particularly suitable for all kinds of beer and wine known to a person skilled in the art as for example strong beer, lager, ale, pale beer, wheat beer, stout, rice beer, sake, cider, white wine, red wine, rose, cidre and sparkling wine but also spirits of any kind. A particularly suitable beverage according to step (a) (i.e. beverage undergoing the de-alcoholization process) has an ethanol content of from 1 to 60 vol.-%, wherein exemplary concentration ranges are an ethanol content of from 1 to 50 vol.-%, from 2 to 40 vol.-%, from 2 to 30 vol.-%, from 2 to 25 vol.-% and from 2.5 to 20 vol.-%, as well as from 3 to 15 vol.-%. It is further particularly suitable that the beverage according to step (a) (i.e. undergoing the de-alcoholization process) has an dissolved oxygen level below from 0.01 to 3.0 mg/l mg/l, from 0.01 to 1 mg/l or from 0.01 to 0.2 mg/l. A low oxygen level will prevent flavour loss and/or generation of unwanted flavour compounds by oxidation reactions within the beverage which further contributes to the excellent flavour profile of the final product.

Thermal processes and membrane processes for de-alcoholization of an ethanol containing beverage are well known to a person skilled in the art since the late 1970s and have already been described and patented since the late 1960s as e.g. by DE1442269 B1 or by WO 2010086184. Thermal and membrane processes for de-alcoholization of beverages are also referred to and described by Müller et al. (see above), by Mangindaan *et al.* (see above), Zufall and Wackerbauer ( Verfahrenstechnische Parameter bei der Entalkoholisierung von Bier mittels Fallstromverdampfung und ihr EinfluR auf die Bierqualität (Monatsschrift für Brauwissenschaft, Heft 7/8, 2000, S.124f)), Andres-Iglesias et al. (Simulation and flavor compound analysis of dealcoholized beer via one-step vacuum distillation; Food Research International, 76 (2015) 751-760), Brányik et al. (A review of methods of low alcohol and alcohol-free beer production, Journal of Food Engineering 108 (2012) 493-506) and Belisario-Sánchez et al. (Aroma Recovery in Wine Dealcoholization by SCC Distillation; Article in Food and Bioprocess Technology · August 2011, DOI: 10.1007/s11947-011-0574-y). Examples for thermal de-alcoholization processes are de-alcoholization by falling-film evaporation, rectification or spinning cone column evaporation. Examples for membrane de-alcoholization processes are pervaporation, osmotic distillation, dialysis and reverse-osmosis.

Patent document US2016/326473A1 discloses a device and a method for producing a de-alcoholized beverage.

De-alcoholization according to the present invention is carried out until an ethanol reduction of the original ethanol content of the beverage of from 10 to 100%, from 20 to 100%, from 30 to 100% or from 40 to 100% is achieved. Ethanol reduction of the original ethanol content of the beverage can also be carried out until an ethanol reduction of from 40 to 99.9 %, from 50 to 99.7%, from 60 to 99.8 % or from 70 to 99.5% is achieved. Within particularly suitable embodiments, the ethanol content of the de-alcoholized beverage is therefore selected from the range of from 0 to 20 %, from 0 to 15 vol.-%, from 0 to 5 vol.-% from 0 to 1 vol.-%, from 0 to 0.7 vol.-%, from 0 to 0.5 vol.-%, from 0 to 0.05 vol.-%. Further suitable ranges of the ethanol content of the de-alcoholized beverage are selected from 0.01 to 7 vol.-%, from 0.01 to 5 vol.-%, from 0.01 to 2.5 vol.-% and from 0.01 to 1.5 vol.-%.

Step (a) of the inventive method may be carried out as a one or two step process-step. Within the embodiment wherein step (a) is carried out as a two-step process-step, a process stream 1 is obtained which is the "ethanol containing process stream" further subjected to method steps (b) to (d); in addition, a process stream 2 is obtained which is discarded. The volumetric ratio of process stream 1 to process stream 2 is suitably selected from the range of from 0.01 to 1, wherein from 0.05 to 0.9 and from 0.1 to 0.75 is also a suitable range.

The "separating" according to step (b) of the inventive method can be carried out by any means or measure which is known to a person skilled in the art as suitable for the inventive purpose. Suitable separating means or measures for separating the de-alcoholized beverage and ethanol containing process stream are known to a person skilled in the art and part of the well known processes for thermal or membrane-based de-alcoholization processes.

Within a particularly suitable embodiment suitable for beverages with an initial ethanol content of from 1 to 30 or from 2.5 to 20 vol.-%, the volumetric ratio of the ethanol containing process stream according to step (b) of the inventive method to the de-alcoholized beverage is selected from the range of from 1 to 50 vol.-%, from 2 to 40 vol.-%, from 3 to 35 vol.-% or from 5 to 30 vol.-%.

Within another particularly suitable embodiment, the ethanol containing process stream contains from 2 to 40 vol.-% ethanol, wherein further possible ethanol contents can be selected from the range of from 2 to 35 vol.-%, from 2 to 30 vol.-%, from 2 to 25 vol.-%, from 2 to 20 vol.-%, from 3 to 35 vol.-%, from 3 to 30 vol.-%, from 3 to 20 vol.-% or from 2 to 15 vol.-%.

Within another particularly suitable embodiment of the inventive method the ethanol containing process stream contains from 2 to 40 vol.-% ethanol, from 60 to 98 vol.-% H20 and from 50 to 200 mg/l aromatic compounds. Further possible content ranges are from 2 to 25 vol.-% ethanol, from 75 to 98 vol.-% H2O and from 75 to 150 mg/I aromatic compounds.

The term "aromatic compounds" is to be understood to refer to at least one of the following compounds: acetaldehyde, n-propanol, i-butanol, 2-methylbutanol, 3-methylbutanol, ethylacetate, phenylethanol, 3-methylbutanoic acid, hexanoic acid and caprylic acid.

Particularly suitable ethanol containing process streams contain at least 3 of the above mentioned aromatic compounds. Within another suitable embodiment the inventive method is carried out at a temperature selected from the range of from 5 to 70°C, other suitable ranges are from 10 to 65°C or from 15 to 65 °C. It is thereby particularly suitable that the process steps of the inventive method are carried out at different temperatures, wherein the adsorption is carried out at a temperature selected from the range of from 20 to 65 °C or from 25 to 60 °C. The ethanol containing beverage may have a temperature selected from the range of from 5 to 25 °C or from 5 to 20 °C. Within a particular suitable embodiment of the inventive method, the ethanol containing beverage has a temperature of from 5 to 20 °C, the ethanol containing process stream has a temperature of from 15 to 40 °C and the temperature within the at least one adsorber column is from 20 to 65 °C.

The "conveying" according to step (c) of the inventive method can be carried out by any means or measure known to a person skilled in the art as suitable for the inventive purpose, for example by pumping the ethanol containing process stream to the condenser (step (c)(i)) or to the adsorber column (step (c)(ii)).

The at least one stripping column as used within the inventive method comprises a filling material which increases the surface of the ethanol containing process stream to generate a large material exchange surface with the inert-gas stream which is implemented counter-currently to the ethanol containing process stream.

The filling material may be advantageously selected from saddles, pall rings, hacketten or Raschig rings. Within a particularly suitable embodiment of the inventive method the filling material of the at least one stripping column comprises from 100 to 5000 Raschig rings per litre stripping column capacity, wherein from 500 to 4500, or from 1000 to 4300 Raschig rings per litre stripping column capacity lead to particularly advantageous results. Particularly suitable results can be achieved for a filling material wherein the size of each saddle, pall ring, hackett or Raschig ring is selected from the range of from 1/10 to 1/50 of the diameter of the stripping column. Other suitable ranges are from 1/15 to 1/45 of the diameter of the stripping column or from 1/20 to 1/40 of the diameter of the stripping column.

Within the stripping column, the ethanol containing process stream is contacted with a counter-flowing inert-gas stream. Within a particularly suitable embodiment of the inventive method the specific flow rate of the inert-gas stream is selected from the range of from 30 to 600 L inert-gas/ hour / L packed volume of the stripping column. Other suitable ranges are from 50 to 500 L inert-gas/ hour / L packed volume or from 75 to 400 L inert-gas/ hour / L packed volume. Within an alternative suitable embodiment, the specific flow rate of the inert-gas stream is selected from the range of from 50 to 950 L inert-gas/ hour / L volume adsorber material. Other suitable ranges are from 80 to 900 L inert-gas/ hour / L volume adsorber material or from 120 to 750 L inert-gas/ hour / L volume adsorber material. Within another advantageous embodiment of the inventive method the flow rate of the inert-gas stream through the at least one stripping column is from 0.05 to 0.5 m³ inert-gas/(m² stripping column cross section area·s), such as from 0.075 to 0.25 m³ inert-gas/(m² stripping column cross section area·s) or from 0.09 to 0.20 m³ inert-gas/(m² stripping column cross section area·s).

Exemplary inert-gases particularly suitable for the inventive method according to step (c)(i) are CO₂ and N₂.

According to step (c)(i) of the inventive method and after leaving the at least one stripping column, the inert-gas stream is contacted with at least one adsorber column. The term "contacting" within the scope of step (c)(i) of the method according to the invention is understood as meaning any type of contacting which appears to the person skilled in the art to be suitable for the purpose according to the invention. Contacting within the scope of step (c)(i) can be advantageously conducted by passing the inert-gas stream through the at least one adsorber column. Within special embodiments, a plurality of columns, such as from 2 to 10 or from 2 to 6 adsorber columns are used. Exemplary embodiments of the inventive method use 3, 4, 5 or 6 adsorber columns. These columns can be connected in series or in parallel.

In case the inventive method is carried out by conducting step (c)(ii) instead of step (c)(i), the ethanol containing process stream is not condensed but directly conveyed to the at least one adsorber column. In this embodiment, the ethanol containing process stream may also be enriched by a volume of 0.1/1 to 25/1 volume inert gas to volume ethanol containing process stream before it enters the at least one adsorber column to ascertain that no condensation takes place before entering the at least one adsorber column. The definitions given above regarding the inert gas and inert gas stream are also applying to the embodiment according to step c(ii) of the inventive process.

Within the scope of the present invention, the at least one adsorber column comprises an adsorber material e.g. an MFI zeolite and/or a silicalite with a molar SiO₂/Al₂O₃ ratio of at least 200. Exemplary molar SiO₂/Al₂O₃ ratios are from 200 to 1600, from 350 to 1500, from 400 to 1400, from 500 to 1300 or from 800 to 1200. In embodiments with more than one adsorber column the columns may comprise the same or a different adsorber material.

Within the scope of an exemplary embodiment, the amount of zeolite in the adsorber material is at least 10 wt.-% (based on the total weight of the adsorber material), further suitable amounts are at least 25 wt.-%, at least 50 wt.-%, at least 75 wt.-%, at least 85 wt.-% or at least 90 wt.-%. Suitable ranges are from 10 to 100 wt.-%, from 30 to 100 wt.-%, from 50 to 100 w.-%, from 40 to 95 wt.-%, from 50 to 95 wt.-%, from 60 to 95 wt.-% or from 60 to 100 wt.-%.

Within another exemplary embodiment, the pore diameter of the MFI zeolite is not more than 8 Å (or not more than 7.5 Å, not more than 7 Å or not more than 6.5 Å. Suitable ranges of the pore diameter are from 5 to 8 Å, from 5.5 to 7 Å, from 6 to 6.5 Å, from 5 to 6.5 Å or from 2.4 to 3.4 Å. Within particularly suitable embodiments the amount to zeolite with a pore diameter selected from above defined ranges is chosen in the range of from 25 to 100 wt.-% (based on the total weight of the adsorber), of from 50 to 100 wt.-%, of from 75 to 100 wt.-% or from 90 to 100 wt.-%.

In another suitable embodiment, the ratio by mass of the adsorbed compounds to the mass of the MFI zeolite and/or silicalite having a pore diameter of not more than 8 Å is selected from the range of from 1 to 1000 or from 2 to 500 or from 3 to 200, likewise suitable ranges are ranges of from 4 to 100 and from 5 to 50.

In a particularly suitable embodiment, the MFI zeolite is a zeolite which, at a temperature of 40°C and a pressure of 1.013 bar absolute, binds at least twice the mass, preferably 2.5 times the mass and particularly preferably three times the mass of alcohols including methanol, ethanol or propanol, as compared with water, when the liquid is an aqueous solution of at least 50 g/l alcohols. These properties of the MFI zeolite can be determined by stripping 500 ml of an aqueous solution comprising at least 50 g/l of the alcohol for 24 hours at a pressure of 1.013 bar and a temperature of 30°C with 1 litre of inert gas volume per minute and passing the gas stream enriched with the alcohol through a column filled with 400 g of the MFI zeolite. The gas stream depleted of the alcohol is recycled. The total mass taken up is determined by determining the weight of the MFI zeolite before and after the test. The amount of water can be determined by Karl-Fischer titration. The remainder of the bound mass is attributable to the adsorbed alcohol. A liquid consisting of 50 g/l of ethanol in water is used.

Within the scope of the present invention, further possible constituents of the adsorber material can be chosen from the group consisting of silica, bentonites, silicates, clays, hydrotalcites, aluminum silicates, oxide powders, mica, glasses, aluminates, clinoptolites, gismondines, quartzes, active carbons, animal charcoal, montmorillonites, as well as organic polymers which are known to the person skilled in the art as being suitable for the method according to the invention, and mixtures thereof. Polytetrafluoroethylene (PTFE, Teflon) is additionally suitable as a constituent of the adsorber material. Within the scope of the method according to the invention, a suitable amount of a binder and/or PTFE in the adsorber material is not more than 75 wt.-%, not more than 50 wt.-%, not more than 25 wt.-%, not more than 20 wt.-% or not more than 10 wt.-%. Within particularly suitable embodiments the amount of a binder and/or PTFE in the adsorber material is chosen in the range of from 10 to 50 wt.-% or in the range of from 10 to 25 wt.-%.

The expression "pore diameter" is understood as meaning the maximum diameter of a theoretical sphere which can be embedded in the micropores of the zeolite.

The expression "molecule diameter" is understood as meaning the diameter of the maximum projection diameter of a molecule.

According to the discussion above, a major part of the aromatic compounds originally contained in the beverage will be transferred to the ethanol containing process stream during state of the art thermal or membrane based de-alcoholization processes and within the state of the art methods this process stream is either partially or fully discarded. These important aromatic compounds include: n-propanol, 3-methylbutylacetate, 2-methyl-1-propanol, isobutyl, isoamylacetat, acetaldehyde, ethylacetate, i-butanol, 2-methylbutanol, 3-methylbutanol, phenylethanol, ethylformiate, phenylethylacetate and isoamyl alcohol. The term "aromatic compounds" according to the inventive method therefore refers to any or more compounds selected from the above listed compounds.

The ethanol containing process stream according to the present invention contains from 85 to 100% of the original content of the above listed compounds when the ethanol content of the beverage is reduced to 0.05 to 5 vol.-% by a state of the art thermal or membrane-based processes.

In case the inventive process is carried out by implementing step (c) (ii) as defined above, within step (d) of the inventive method, the remaining gaseous process stream leaving the at least one adsorber column is recycled to the de-alcoholized beverage. By carrying out step (d) of the inventive method the flavor profile of the final product is restored as the aromatic compounds separated by the state of the art thermal or membrane dealcoholization processes can be recycled and resolved to the dealcoholized beverage as they are not adsorbed to the adsorber material of the at least one adsorber column. The "recycling" can be carried out by any means or measure known to a person skilled in the art as suitable for the inventive method. Within an alternative embodiment, the gaseous process stream leaving the at least one adsorber column is condensed before it is recycled to the de-alcoholized beverage.

In case the inventive process is carried out by implementing step (c) (i) as defined above within step (d) of the inventive method, the remaining gaseous process stream leaving the at least one adsorber column is recycled to the de-alcoholized beverage via the at least one stripping column. Within this embodiment, the gaseous process stream leaving the at least one adsorber column is transferred to the dealcoholized beverage via the at least one stripping column. This embodiment is particularly suitable in case the ethanol content of the final product is from 0.5 to 5 vol.-% for example in case of light beer or alcohol-reduced wine, as it enables to also transfer back not only a major part of the aromatic compounds of the original beverage but also part of the initially removed ethanol to the final product up to a certain desired content. By carrying out step (d) of the inventive method the flavor profile of the final product is restored as the aromatic compounds separated by the state of the art thermal or membrane dealcoholization processes can be recycled and resolved to the dealcoholized beverage as they are not adsorbed to the adsorber material of the at least one adsorber column. In addition, the ethanol content of the final product can be precisely adjusted. The "recycling" can be carried out by any means or measure known to a person skilled in the art as suitable for the inventive method. Within an alternative embodiment, the gaseous process stream leaving the at least one adsorber column is condensed before it is recycled to the de-alcoholized beverage.

Within another embodiment of the inventive method, the fraction of the ethanol containing process stream which is adsorbed on the at least one adsorber column may be desorbed from the at least one adsorber column. This fraction contains from 15 to 90 vol.-% ethanol which can be sold separately and therefore further improve profitability of the inventive method as no further purification has to be carried out. Desorption is particularly suitable carried out at a temperature of from 20 to 65 °C and a pressure of from 0.04 to 0.3 bar.

Within another embodiment of the inventive method step (c) is repeated at least once, wherein it is particularly suitable to repeat step (c) from 2 to 100 times, from 3 to 80 times or from 3 to 50 times.

Within another embodiment of the inventive method steps (c) and (b) are repeated at least once, wherein it is particularly suitable to repeat step (c) from 2 to 100 times, from 3 to 80 times or from 3 to 50 times.

### Specific embodiments of the present invention

The following specific embodiments define embodiments which are particularly advantageous for the inventive method. These embodiments are not meant to limit the scope of the present application in any respect.

### Specific embodiment A

Method for the reduction of aroma loss during the production of ethanol-reduced and ethanol-free beverages comprising the steps:
(a) De-alcoholization of a beverage selected from beer and wine containing from 1 to 20 vol.-% ethanol by a thermal or membrane-based dealcoholization process;
(b) Separating the ethanol containing process stream with an ethanol content of from 2 to 25 vol.-% from the de-alcoholized beverage, wherein the ethanol containing process stream contains from 2 to 40 vol.-% ethanol, from 60 to 98 vol.-% H20 and from 50 to 200 mg/l aromatic compounds, wherein the aromatic compounds are selected from the group consisting of n-propanol, 3-methylbutylacetate, 2-methyl-1-propanol, isobutyl, isoamylacetat, acetaldehyde, ethylacetate, i-butanol, 2-methylbutanol, 3-methylbutanol, phenylethanol, ethylformiate, phenylethylacetate and isoamyl alcohol;
(c)
   (i) Conveying the separated ethanol containing process stream to a condenser, at least one stripping column and subsequently to at least one adsorber column, wherein the ethanol containing fraction of the ethanol containing process stream is adsorbed on the at least one adsorber column;
(d) Recycling of the remaining process stream to the de-alcoholized beverage without prior condensation.

### Specific embodiment B

Method for the reduction of aroma loss during the production of ethanol-reduced and ethanol-free beverages comprising the steps:
(a) De-alcoholization of a beverage selected from beer and wine containing from 1 to 20 vol.-% ethanol by a thermal or membrane-based dealcoholization process;
(b) Separating the ethanol containing process stream with an ethanol content of from 2 to 25 vol.-% from the de-alcoholized beverage, wherein the ethanol containing process stream contains from 2 to 40 vol.-% ethanol, from 60 to 98 vol.-% H20 and from 50 to 200 mg/l aromatic compounds, wherein the aromatic compounds are selected from the group consisting of n-propanol, 3-methylbutylacetate, 2-methyl-1-propanol, isobutyl, isoamylacetat, acetaldehyde, ethylacetate, i-butanol, 2-methylbutanol, 3-methylbutanol, phenylethanol, ethylformiate, phenylethylacetate and isoamyl alcohol;
(c) (ii) Conveying the separated ethanol containing process stream directly to at least one adsorber column;
   wherein the ethanol containing fraction of the ethanol containing process stream is adsorbed on the at least one adsorber column;
(d) Recycling of the remaining process stream to the de-alcoholized beverage without prior condensation.

### Specific embodiment C

Method for the reduction of aroma loss during the production of ethanol-reduced and ethanol-free beverages comprising the steps:
(a) De-alcoholization of a beverage selected from beer and wine containing from 1 to 20 vol.-% ethanol by a thermal or membrane-based dealcoholization process;
(b) Separating the ethanol containing process stream with an ethanol content of from 2 to 25 vol.-% from the de-alcoholized beverage, wherein the ethanol containing process stream contains from 2 to 40 vol.-% ethanol, from 60 to 98 vol.-% H20 and from 50 to 200 mg/l aromatic compounds, wherein the aromatic compounds are selected from the group consisting of n-propanol, 3-methylbutylacetate, 2-methyl-1-propanol, isobutyl, isoamylacetat, acetaldehyde, ethylacetate, i-butanol, 2-methylbutanol, 3-methylbutanol, phenylethanol, ethylformiate, phenylethylacetate and isoamyl alcohol;
(c)
   (i) Conveying the separated ethanol containing process stream to a condenser, at least one stripping column and subsequently to at least one adsorber column, wherein the ethanol containing fraction of the ethanol containing process stream is adsorbed on the at least one adsorber column;
(d) Recycling of the remaining process stream to the de-alcoholized beverage with prior condensation.

### Specific embodiment D

Method for the reduction of aroma loss during the production of ethanol-reduced and ethanol-free beverages comprising the steps:
(a) De-alcoholization of a beverage selected from beer and wine containing from 1 to 20 vol.-% ethanol by a thermal or membrane-based dealcoholization process;
(b) Separating the ethanol containing process stream with an ethanol content of from 2 to 25 vol.-% from the de-alcoholized beverage, wherein the ethanol containing process stream contains from 2 to 40 vol.-% ethanol, from 60 to 98 vol.-% H20 and from 50 to 200 mg/l aromatic compounds, wherein the aromatic compounds are selected from the group consisting of n-propanol, 3-methylbutylacetate, 2-methyl-1-propanol, isobutyl, isoamylacetat, acetaldehyde, ethylacetate, i-butanol, 2-methylbutanol, 3-methylbutanol, phenylethanol, ethylformiate, phenylethylacetate and isoamyl alcohol;
(c) (ii) Conveying the separated ethanol containing process stream directly to at least one adsorber column;
   wherein the ethanol containing fraction of the ethanol containing process stream is adsorbed on the at least one adsorber column;
(d) Recycling of the remaining process stream to the de-alcoholized beverage with prior condensation.

### Specific embodiment E

Method for the reduction of aroma loss during the production of ethanol-reduced and ethanol-free beverages as defined according to any of specific embodiments A to D, wherein step (a) is carried out as a two-stage step and wherein a process stream 1 is obtained which is the ethanol containing process step subjected to method steps (b) to (d) and wherein a process stream 2 is obtained which is discarded and wherein the volumetric ratio of process stream 1 to process stream 2 is selected from the range of from 0.01 to 1.

### Specific embodiment F

Method for the reduction of aroma loss during the production of ethanol-reduced and ethanol-free beverages as defined according to any of specific embodiments A to E, wherein the adsorber material of the at least one adsorber column comprises an MFI zeolite and/or a silicalite with a molar SiO2/Al2O3 ratio of at least 200.

### Examples and Figures

The present invention is explained in greater detail below by means of the examples. It is emphasized that the examples illustrate particular embodiments and do not limit the scope of the present application in any way.
- Fig. 1:: shows a flow chart of a set up for conducting the inventive method implementing a step (a) as a two-stage step and implementing condensation of the ethanol containing beverage stream

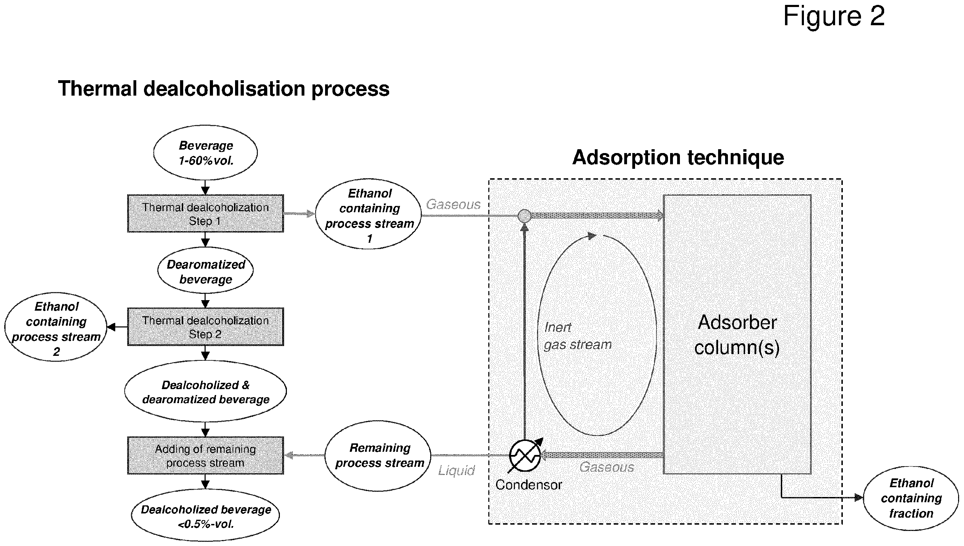

- Fig. 2:: shows a flow chart of a set up for conducting the inventive method implementing a step (a) as a two-stage step but no condensation of the ethanol containing beverage stream
- Fig. 3:: shows the ethanol content in the gas stream behind the adsorber column with 80 min cycle time according to example 1
- Fig. 4:: shows the ethanol content in the gas stream behind the adsorber column with 20 min cycle time according to example 1
- Fig. 5:: shows the results of example 2
- Fig. 6: shows the distribution of aromatic compounds in the beverage, the de-alcoholized beverage and the ethanol containing process stream
- Fig. 7: shows the distribution of aromatic compounds in the ethanol containing process stream, before carrying out step (c) (i) and the remaining process stream after step (c)(i)
- Fig. 8: shows the distribution of acetaldehyde in the ethanol containing process stream, before carrying out step (c) (i) and the remaining process stream after step (c)(i), and in the ethanol containing fraction
- Fig. 9: shows the amount of aromatic compounds, which can be recycled into the dealcoholized beverage after carrying out the inventive process.
- Fig. 10: shows the amount of aromatic compound, that can be recycled into the dealcoholized beverage after the respective process step.

### Example 1: Influence of cycle time during step (c) (i)

1 L synthetic solution of ethanol and water, resembling the ethanol containing process stream with an ethanol concentration of 5 vol.-% was provided in a tempered (20°C) container and conveyed by using a peristaltic pump (Watson Marlow, 520DU) into the stripping column (diameter 60mm, height 1400mm) at the top of the column with a volume flow of 1.5 L/h. The stripping column was filled with filling material (Teflon raschig rings, diameter 6 mm, height 6 mm, Sigma-Aldrich, Z243477). A counter-currently flowing N₂ stream (20 L/min) was conveyed from the bottom to the top of the stripping column. The stripping column was used at a pressure of 1.013 bar and a temperature of 22 °C. The N₂ gas stream was contacted with the adsorber columns and recycled into the stripping column. For adsorption three adsorber columns were used, filled with adsorber material (Clariant, TZP9028; MFI Zeolith, molar SiO₂/Al₂O₃ ratio 1000). Simultaneously two adsorber columns were used for adsorption, one column for desorption. From the N₂ gas stream a sidestream of 0.5 L/min were taken behind the adsorber column and the ethanol content of the gas stream was analysed with a mass spectrometer (Thermo scientific PrimaPro Process MS) for monitoring of the ethanol removal by the adsorber columns. For desorption of the ethanol from the adsorber columns a N₂ gas flow (0.5 L/min) was used. By a vacuum pump the pressure in the adsorber columns was reduced to 100 mbar.

Two experiments were performed with 20min and 80 min cycle time respectively when the adsorber columns were switched.

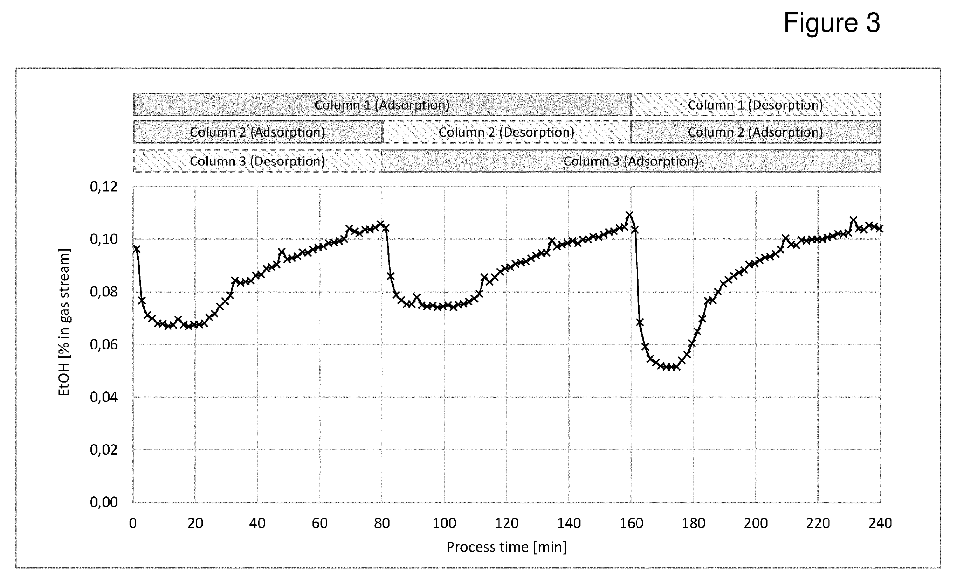

Figure 3 shows the ethanol concentration within the gas stream behind the adsorber column and the mode of each adsorber column 1-3 with 80 min cycle time. 0-80 min: Columns 1/2 in adsorption, column 3 in desorption; 80-160min: Columns 1/3 in adsorption, column 2 in desorption; 160-240min: Columns 2/3 in adsorption, column 1 in desorption.

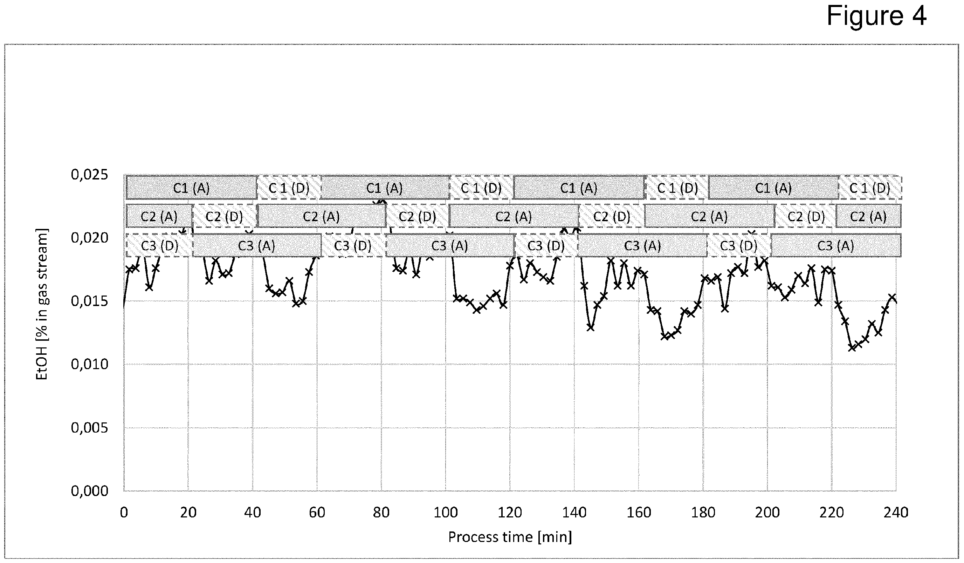

Figure 4 shows the ethanol concentration within the gas stream behind the adsorber column and the mode of each adsorber column 1-3 with 20 min cycle time.

It can be seen from the results of example 1 that the ethanol concentration in the gas stream with a cycle time of 80 min increases after 20-30 min of each cycle resulting in a lower adsorption of ethanol. With 20 min cycles the ethanol concentration in the gas stream is much lower at 0.01-0.025%.

### Example 2: Influence of ethanol concentration during step (c)(i)

1 L synthetic solution of ethanol and water resembling the ethanol containing process stream with different ethanol concentrations of 5 vol.-%, 15 vol.-%, 30 vol.-% and 40 vol.-% was provided in a tempered (20°C) container and conveyed by using a peristaltic pump (Watson Marlow, 520DU) into the stripping column (diameter 60mm, height 1400mm) at the top of the stripping column with a volume flow of 1.5 L/h. The stripping column was filled with filling material (Teflon raschig rings, diameter 6 mm, height 6 mm, Sigma-Aldrich, Z243477). A counter-currently flowing N₂ stream (20 L/min) was conveyed from the bottom to the top of the stripping column. The stripping column was used at a pressure of 1.013 bar and a temperature of 22 °C. The N₂ gas stream was contacted with the adsorber columns and recycled into the stripping column. For adsorption three adsorber columns were used, filled with adsorber material (Clariant, TZP9028; MFI Zeolith, molar SiO₂/Al₂O₃ ratio 1000). Simultaneously two columns were used for adsorption, one column for desorption. For desorption of the ethanol from the adsorber columns a N₂ gas flow (0.5 L/min) was used. By a vacuum pump the pressure in the adsorber columns was reduced to 100 mbar. The experiments were performed with 20min cycle time.

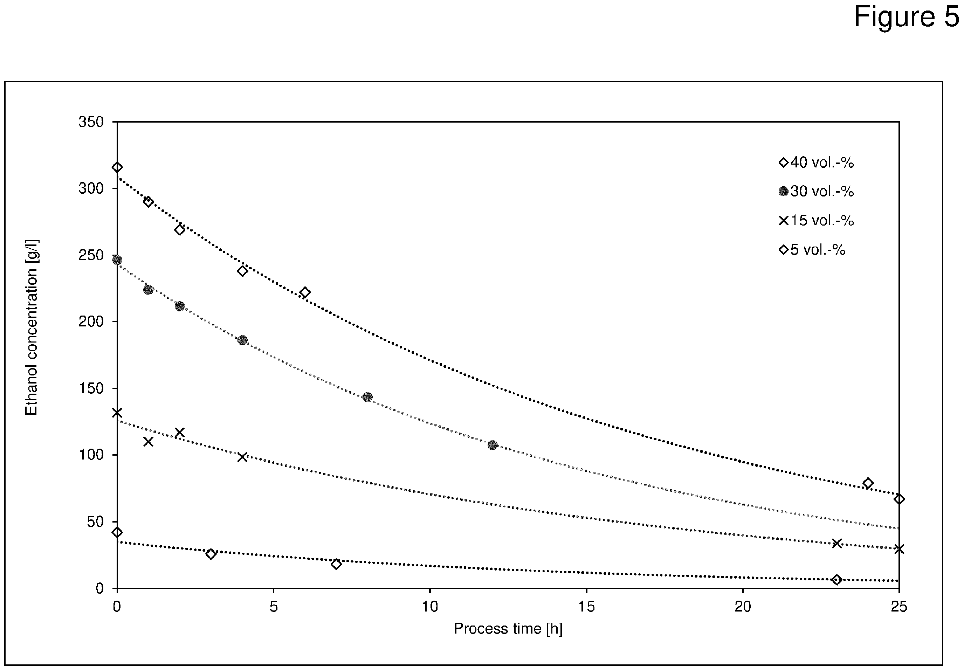

Figure 5 shows the dealcoholization of the different synthetic solutions. The dealcoholization can be fitted by an exponential function *c_{Ethanol}* (*t*) = *A* · *e^{-B·t}* with ***c _{Ethanol}*** as the ethanol concentration at the time ***t**. **A*** as a constant which can be expressed as the ethanol concentration at the beginning of the process and ***B*** as a constant describing the ethanol removal. The constants of the fittings and the regression coefficient ***R²*** of the fitting are shown in table 1.

**Table 1: Parameters of the exponential fitting**

| Ethanol concentration | A | B | Regression coefficient ***R²*** |
|---|---|---|---|
| 5 vol.-% | 243.2 | 0.068 | 0.999 |
| 15 vol.-% | 308.9 | 0.059 | 0.997 |
| 30 vol.-% | 125.7 | 0.058 | 0.996 |
| 40 vol.-% | 34.9 | 0.072 | 0.985 |

By differentiation of the function the ethanol removal can be described as ***dc_{Ethanol}*/*dt*** = ***B* · *c_{Ethanol}***(***t***)***.*** As can be seen the constant B is the range of 0.58-0.72 independent from ethanol concentration. It can be seen from the results of example 2 that the ethanol removal increases with the concentration resulting in a faster and cost effective inventive process especially at high concentration of the ethanol containing process stream.

### Example 3: Analysis of Aromatic profile

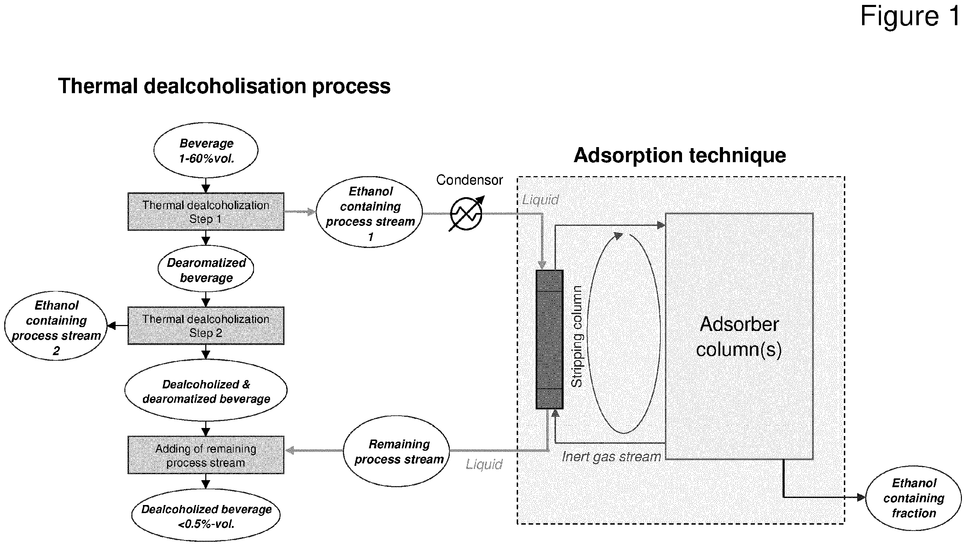

Conducting a thermal based de-alcoholization, as depicted in Fig.1, a de-alcoholized beverage and an ethanol containing process stream 1 are produced.

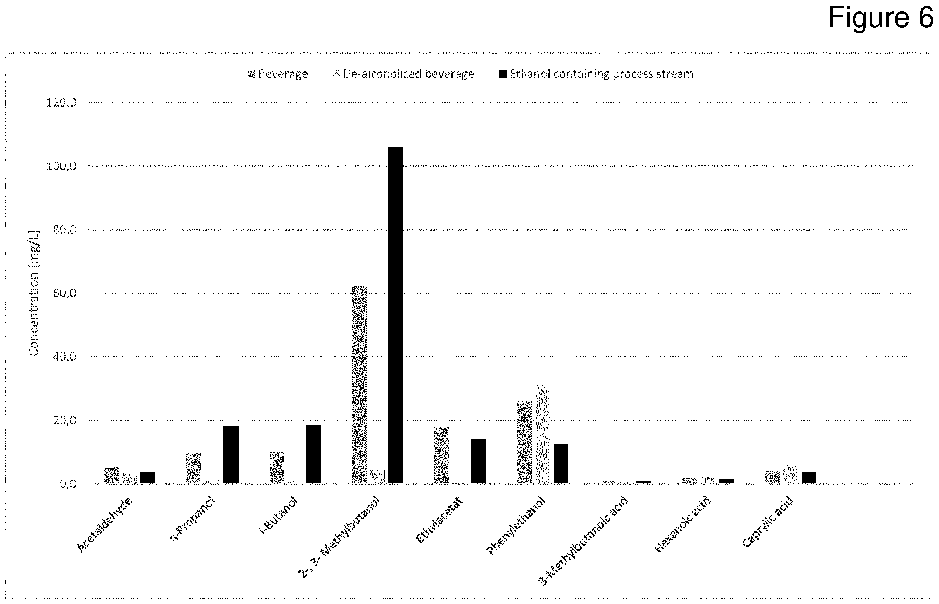

Aromatic compounds, originally contained in the beverage, are transferred to the ethanol containing process stream during the thermal based de-alcoholization process. This transfer is visualized in Fig. 6. There the aromatic compound distribution of a beverage, as well as the de-alcoholized beverage and ethanol containing process stream that derive from it, are depicted. The following aromatic compounds were measured by the method gas chromatography (Gas Chromatography Headspace with FID Sampler).
Acetaldehyde
n-Propanol
i-Butanol
2-Methylbutanol
3-Methylbutanol
Ethylacetate
Phenylethanol
3-Methylbutanoic acid
Hexanoic acid
Caprylic acid

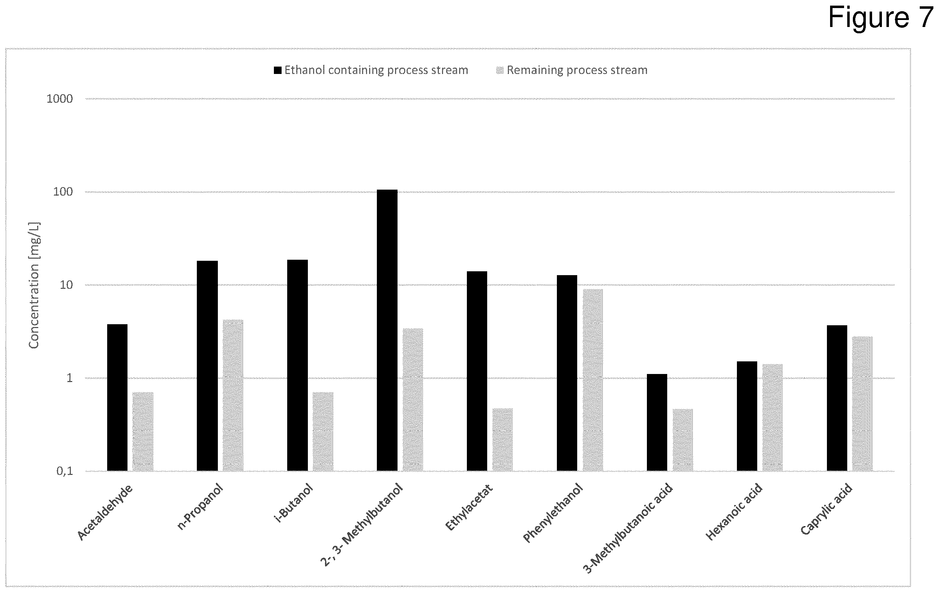

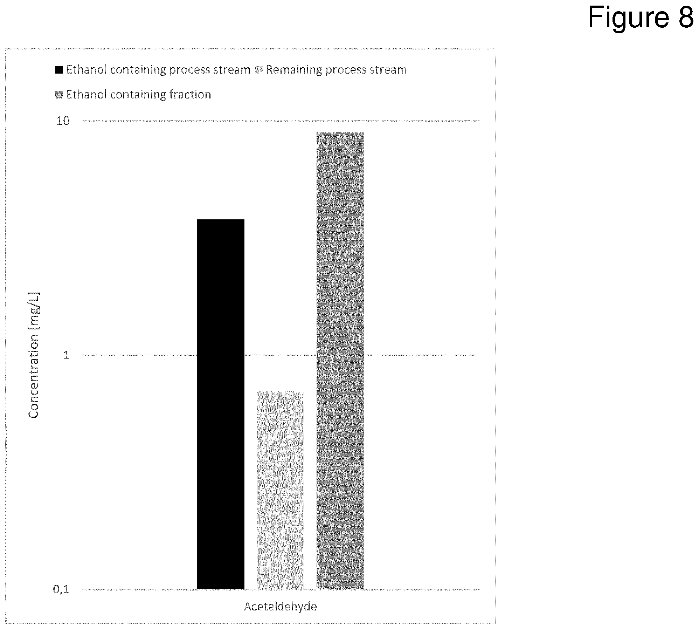

The ethanol containing process stream is subjected to step (c)(i) as depicted in Fig. 1. Here, the ethanol containing process stream, containing the aromatic compounds, is separated into an ethanol containing fraction and a remaining process stream where the aromatic compounds are accumulated. The distribution of aromatic compounds is depicted in Fig. 7. The aromatic compound "acetaldehyde", which is considered being an off flavor, is adsorbed on the adsorber and hence accumulates in the ethanol containing fraction. (Fig. 8)

The experiment was conducted the following way:
1L of the ethanol containing process stream was placed in a tempered (15°C) container and conveyed by using a peristaltic pump (Watson Marlow, 520DU) into the stripping column (diameter 60mm, height 1400mm) at the top of the column with a volume flow of 2 L/h. The stripping column was filled with filling material (Teflon raschig rings, diameter 6 mm, height 6 mm, Sigma-Aldrich, Z243477). A counter-currently flowing inert gas stream (N2, 12 L/min) was conveyed from the bottom to the top of the stripping column. The stripping column was used at a pressure of 1.013 bar and a temperature of 22 °C. The inert gas stream was contacted with the adsorber columns and recycled into the stripping column. For adsorption three adsorber columns were used, filled with adsorber material (Clariant, TZP9028; MFI Zeolith, molar SiO2/Al2O3 ratio 1000). Simultaneously two columns were used for adsorption, one column for desorption. For desorption of the ethanol from the adsorber columns an inert gas stream (N2, 0.6 L/min) was used. By a vacuum pump the pressure in the adsorber columns was reduced to 100 mbar. After a cycle time of 20 min the columns changed their role. 72 cycles were conducted.

Example 3 shows, that the inventive process, selectively separates ethanol from the ethanol containing process stream but retains the aromatic compounds within the remaining process stream. Figures 6 and 7 show that a major part of the aromatic compounds separated from the beverage by state of the art de-alcoholization processes can be recycled to the final product. In addition, the off-flavor acetaldehyde can be significantly reduced (Fig. 8).

### Example 4: Determination of recyclable remaining process stream, in comparison to recycling of ethanol containing process stream

In Example 4, the amount of recyclable remaining process stream will be determined. Finally it will also be compare to a direct recycling of the ethanol containing process stream. The recyclable remaining process stream is determined by its ethanol concentration. The smaller the ethanol concentration in the ethanol containing process stream, the more can be recycled into the beverage. Two parameters are decisive for the ethanol concentration in the remaining process stream. The ethanol concentration of the educt of the inventive method (the ethanol containing process stream) and the temperature at which the method is conducted.

In this example, 4 experiments were performed varying these parameters. The experiments were conducted as described in the experiment description in Example 3. Table 2, columns 2 and 3 show the parameters. The ethanol concentration of the educt was varied between 5.-% and 40.-% and the temperature was varied between 5°C and 20°C. This way, 4 remaining process streams were produced. Table 2 shows in column 4, the ethanol concentration for these remaining process streams. Furthermore, in column 5, the amounts of remaining process stream recycled to 1L de-alcoholized beverage are calculated. This calculation takes as a basis, that the de-alcoholized beverage has an ethanol concentration of 0.01 vol.-% and can be topped up with remaining process stream to 0.5 vol.-%.

**Table 2 shows the parameters applied in the experiments, the remaining ethanol concentration in the remaining process stream and the amount of remaining process stream that can be recycled to 1L of de-alcoholized beverage.**

| Sample | Ethanol concentration in ethanol containing process stream [vol.-%] | Temperature of inventive method [°C] | Ethanol concentration in remaining process stream [vol.-%] | Amount of remaining process stream recycled to 1L de-alcoholized beverage [ml] |
|---|---|---|---|---|
| 1 | 5 | 5 | 2.3 | 272 |
| 2 | 5 | 20 | 0.4 | ∞ (372) * |
| 3 | 40 | 5 | 10.2 | 51 |
| 4 | 40 | 20 | 3.2 | 181 |

| | | | | |
|---|---|---|---|---|
| * As the ethanol concentration of the second sample is below 0.5%vol the generated volume of remaining process stream can be added completely. In a standard thermal dealcoholization process, 389ml of ethanol containing process stream are produced during the production of 1L of dealcoholized beverage. From 389ml of ethanol containing process stream, 372ml of remaining process stream can be generated by the inventive method. | | | | |

To compare the values to the state of the art, table 3 shows a list of the amount of ethanol containing process stream, recycled directly into a de-alcoholized beverage. Here again the amount of recycled product differs with the ethanol concentration. Also here, the calculation takes as a basis, that the de-alcoholized beverage has an ethanol concentration of 0.01 vol.-% and can be topped up with ethanol containing process stream to 0.5 vol.-%.

**Table 3 shows recyclable amounts of ethanol containing process stream for different ethanol concentrations when directly recycled into the de-alcoholized beverage.**

| Sample | Ethanol concentration in ethanol containing process stream [vol.-%] | Amount of ethanol containing process stream recycled to de-alcoholized beverage [ml] |
|---|---|---|
| A | 5 | 109 |
| B | 40 | 12 |

The larger the amount of recycled process stream (ethanol containing process stream or remaining process stream), the more aromatic compounds can be re-transferred to the final beverage product. Comparing sample A to sample 1 and 2, and sample B to samples 3 and 4, it gets clear that by implementing the method of invention, the amount of recycled process stream transferred to 1L de-alcoholized beverage is significantly larger than the amount, which could have been recycled without the inventive treatment. For an ethanol concentration of 5 vol.%, 109ml of an ethanol containing process stream (sample A) could be recycled, in case the inventive method is applied, a remaining process stream of 272ml (sample 1) or even 372ml (sample 2) can be recycled into the dealcoholized beverage. This means doubling or even tripling the recyclable amount. Therefore, a much higher content of aromatic compounds can be recycled into the dealcoholized beverage. For an ethanol containing process stream with an ethanol concentration of 40 vol.-%, the increase is even more significant. Instead of recycling 12ml back to the dealcoholized beverage (sample B), 51ml (sample 3) or even 181ml (sample 4) of remaining process stream can be recycled. This means the recycled amount is 5 or even 15 times higher.

### Example 5: Quality and quantity of re-transferable aromatic compounds

In Example 4, the possible volumes of recyclable remaining process stream were already calculated and compared to a direct recycling of ethanol containing process stream. In this example the quality and quantity of the aromatic compounds were determined for the volumes calculated. Here again, sample A is compared to samples 1 and 2 and sample B is compared to samples 3 and 4. The aromatic compounds were analyzed by mass spectrometry. The following aromatic compounds were analyzed.
Acetic acid isobutyl ester
Ethyl butyrate
Ethylhexanoat
Isovaleric acid
Hexanoic acid
Octanoic acid

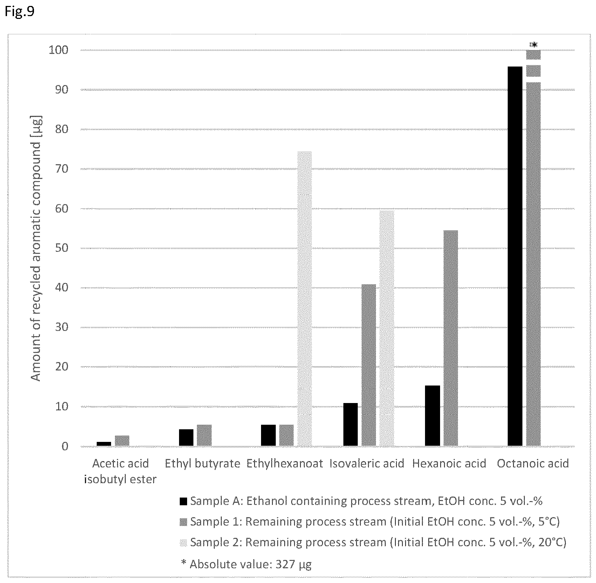

Figure 9 shows the amounts of aromatic compounds, that can be re-added to the de-alcoholized beverage by recycling the volume of sample A, sample 1 or sample 2.

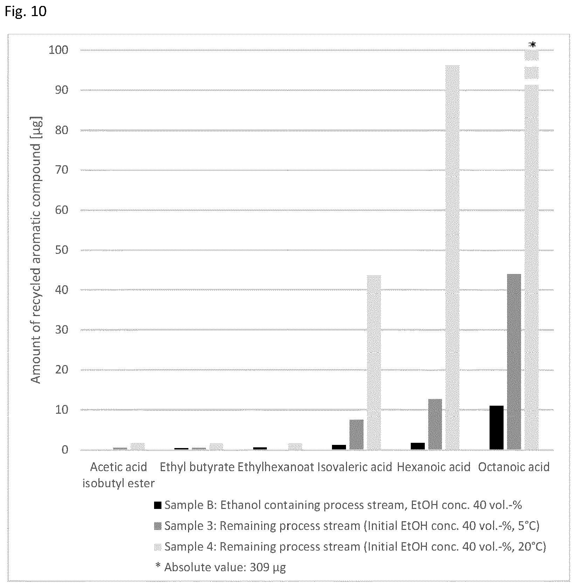

Figure 10 shows the amounts of aromatic compounds, that can be re-added to the de-alcoholized beverage by recycling the volume of sample B, sample 3 or sample 4.

One can see in both figures, that the recycling of remaining process streams instead of ethanol containing process streams results in significantly higher amounts of core aromatic compounds in the final beverage product for exemplary potential production temperatures of 5 and 20 °C. Comparing for example the amounts of aromatic compounds in sample B the ones in sample 4, the increase can be shown very intensely.

The amount of acetic acid isobutyl ester recycled into the final beverage product can be increased by factor 14 by applying the method of invention. The amount of ethyl butyrate can be increased by factor 4. The amount of ethylhexanoat by factor 3 and the amounts of isovaleric acid, hexanoic acid and octanoic acid even by the factors 35, 55 and 28.

## Claims

1. Method for the reduction of aroma loss during the production of ethanol-reduced and ethanol-free beverages comprising the steps:
(a) De-alcoholization of a beverage containing from 1 to 60 vol.-% ethanol by a thermal or membrane-based dealcoholization process;
(b) Separating the ethanol containing process stream from the de-alcoholized beverage;
(c)
(i) Conveying the separated ethanol containing process stream to a condenser, at least one stripping column and subsequently to at least one adsorber column, or
(ii) Conveying the separated ethanol containing process stream directly to at least one adsorber column;
wherein the ethanol containing fraction of the ethanol containing process stream is adsorbed on the at least one adsorber column;
(d) Recycling of the remaining process stream to the de-alcoholized beverage.

2. Method according to claim 1, wherein the adsorber material of the at least one adsorber column comprises an MFI zeolite and/or a silicalite with a molar SiO₂/Al₂O₃ ratio of at least 200.

3. Method according to claim 1 or 2, wherein the beverage has a temperature of from 5 to 20 °C, the ethanol containing process stream has a temperature of from 15 to 40 °C and the temperature within the at least one adsorber column is from 20 to 65 °C.

4. Method according to any of the foregoing claims, wherein the adsorption according to step (c) (i) or (ii) is conducted at a pressure of from 0.5 to 2 bar.

5. Method according to any of the foregoing claims, wherein the conveying of the ethanol containing process stream of step (c) is carried out at a flow rate of from 50-950 (L/hour)/L adsorber volume.

6. Method according to any of the foregoing claims, wherein step (a) is carried out as a two-stage step and wherein a process stream 1 is obtained which is the ethanol containing process step subjected to method steps (b) to (d) and wherein a process stream 2 is obtained which is discarded.

7. Method according to claim 6, wherein the volumetric ratio of process stream 1 to process stream 2 is selected from the range of from 0.01 to 1.

8. Method according to any of the foregoing claims wherein the ratio of the ethanol containing process stream to the de-alcoholized beverage is selected from the range of from 5 to 20 vol.-%.

9. Method according to any of the foregoing claims, wherein the ethanol containing process stream contains from 10 to 90 vol.-% ethanol, from 10 to 90 vol.-% H₂O and from 50 to 200 mg/l aromatic compounds.

10. Method according to any of the foregoing claims wherein the dissolved oxygen level of the beverage according to step (a) is selected from a range of from 0.01 to 3.0 mg/l.

11. Method according to any of the foregoing claims, wherein step (c) is repeated at least once.

12. Method according to any of the foregoing claims, wherein steps (c) and (b) are repeated at least once.

## Patentansprüche

1. Verfahren zur Verringerung des Aromaverlustes bei der Herstellung von ethanolreduzierten und ethanolfreien Getränken, umfassend die Schritte:
(a) Entalkoholisierung eines Getränks mit einem Ethanolgehalt von 1 bis 60 Vol.-% durch ein thermisches oder membranbasiertes Entalkoholisierungsverfahren;
(b) Abtrennung des ethanolhaltigen Prozessstroms vom entalkoholisierten Getränk;
(c)
(i) Leiten des abgetrennten ethanolhaltigen Prozessstroms zu einem Kondensator, mindestens einer Stripperkolonne und anschließend zu mindestens einer Adsorberkolonne, oder
(ii) Zuführung des abgetrennten ethanolhaltigen Prozessstroms direkt zu mindestens einer Adsorberkolonne;
wobei die ethanolhaltige Fraktion des ethanolhaltigen Prozessstroms an der mindestens einen Adsorberkolonne adsorbiert wird;
(d) Recycling des verbleibenden Prozessstroms zum entalkoholisierten Getränk.

2. Verfahren nach Anspruch 1, wobei das Adsorbermaterial der mindestens einen Adsorbersäule einen MFI-Zeolith und/oder einen Silicalit mit einem molaren SiO_{2/}Al₂O₃ Verhältnis von mindestens 200 umfasst.

3. Verfahren nach Anspruch 1 oder 2, wobei das Getränk eine Temperatur von 5 bis 20 °C hat, der ethanolhaltige Prozessstrom eine Temperatur von 15 bis 40 °C hat und die Temperatur in der mindestens einen Adsorberkolonne 20 bis 65 °C beträgt.

4. Verfahren nach einem der vorangehenden Ansprüche, wobei die Adsorption gemäß Schritt (c) (i) oder (ii) bei einem Druck von 0,5 bis 2 bar durchgeführt wird.

5. Verfahren nach einem der vorangehenden Ansprüche, wobei die Förderung des ethanolhaltigen Prozessstroms von Schritt (c) mit einer Durchflussrate von 50-950 (L/Stunde)/L Adsorbervolumen durchgeführt wird.

6. Verfahren nach einem der vorstehenden Ansprüche, wobei Schritt (a) als zweistufiger Schritt durchgeführt wird und wobei ein Prozessstrom 1 erhalten wird, der der Ethanol enthaltende Prozessschritt ist, der den Verfahrensschritten (b) bis (d) unterzogen wird, und wobei ein Prozessstrom 2 erhalten wird, der verworfen wird.

7. Verfahren nach Anspruch 6, wobei das volumetrische Verhältnis von Prozessstrom 1 zu Prozessstrom 2 aus dem Bereich von 0,01 bis 1 ausgewählt ist.

8. Verfahren nach einem der vorstehenden Ansprüche, bei dem das Verhältnis des ethanolhaltigen Prozessstroms zum entalkoholisierten Getränk aus dem Bereich von 5 bis 20 Vol.-% ausgewählt wird.

9. Verfahren nach einem der vorangehenden Ansprüche, wobei der Ethanol enthaltende Prozessstrom 10 bis 90 Vol.-% Ethanol, 10 bis 90 Vol.-% H₂O und 50 bis 200 mg/l aromatische Verbindungen enthält.

10. Verfahren nach einem der vorstehenden Ansprüche, wobei der Gehalt an gelöstem Sauerstoff in dem Getränk nach Schritt (a) aus einem Bereich von von 0,01 bis 3,0 mg/l ausgewählt wird.

11. Verfahren nach einem der vorangehenden Ansprüche, wobei Schritt (c) mindestens einmal wiederholt wird.

12. Verfahren nach einem der vorangehenden Ansprüche, wobei die Schritte (c) und (b) mindestens einmal wiederholt werden.

## Revendications

1. Méthode de réduction de la perte d'arôme lors de la production de boissons à teneur réduite en éthanol et sans éthanol, comprenant les étapes suivantes :
(a) Désalcoolisation d'une boisson contenant de 1 à 60 % d'éthanol par un procédé thermique ou membranaire de désalcoolisation;
(b) Séparation du flux de traitement contenant de l'éthanol de la boisson désalcoolisée;
(c)
(i) acheminer le flux de traitement séparé contenant de l'éthanol vers un condenseur, au moins une colonne d'épuration et ensuite vers au moins une colonne d'adsorption, ou
(ii) acheminer le flux de traitement séparé contenant de l'éthanol directement vers au moins une colonne d'adsorption ;
dans lequel la fraction contenant de l'éthanol du flux de traitement contenant de l'éthanol est adsorbée sur au moins une colonne d'adsorption;
(d) Recyclage du flux de processus restant dans la boisson désalcoolisée.

2. Procédé selon la revendication 1, dans lequel le matériau adsorbant de la colonne adsorbante au moins comprend une zéolite MFI et/ou une silicalite avec un rapport molaire SiO₂/Al₂O₃ d'au moins 200.

3. Méthode selon la revendication 1 ou 2, dans laquelle la boisson a une température comprise entre 5 et 20 °C, le flux de traitement contenant de l'éthanol a une température comprise entre 15 et 40 °C et la température à l'intérieur de la colonne d'adsorption au moins est comprise entre 20 et 65 °C.

4. Procédé selon l'une quelconque des revendications précédentes, dans lequel l'adsorption selon l'étape (c) (i) ou (ii) est effectuée à une pression de 0,5 à 2 bars.

5. Méthode selon l'une quelconque des revendications précédentes, dans laquelle le transport du flux de traitement contenant de l'éthanol à l'étape (c) est effectué à un débit compris entre 50 et 950 (L/heure)/L de volume d'adsorption.

6. Méthode selon l'une des revendications précédentes, dans laquelle l'étape (a) est réalisée en deux étapes et dans laquelle on obtient un flux de traitement 1 qui est l'étape de traitement contenant de l'éthanol soumise aux étapes (b) à (d) de la méthode et dans laquelle on obtient un flux de traitement 2 qui est éliminé.

7. Méthode selon la revendication 6, dans laquelle le rapport volumétrique entre le flux de traitement 1 et le flux de traitement 2 est choisi dans la plage de 0,01 à 1.

8. Méthode selon l'une quelconque des revendications précédentes, dans laquelle le rapport entre le flux de traitement contenant de l'éthanol et la boisson désalcoolisée est compris entre 5 et 20 % en volume.

9. Méthode selon l'une quelconque des revendications précédentes, dans laquelle le flux de traitement contenant de l'éthanol contient de 10 à 90 % en volume d'éthanol, de 10 à 90 % en volume d' H₂O et de 50 à 200 mg/l de composés aromatiques.

10. Procédé selon l'une quelconque des revendications précédentes dans lequel la teneur en oxygène dissous de la boisson selon l'étape (a) est choisie dans une plage de allant de 0,01 à 3,0 mg/l .

11. Méthode selon l'une quelconque des revendications précédentes, dans laquelle l'étape (c) est répétée au moins une fois.

12. Méthode selon l'une quelconque des revendications précédentes, dans laquelle les étapes (c) et (b) sont répétées au moins une fois.
